# EUROPÄISCHE PATENTSCHRIFT

(11) **EP 3 450 248 B1**
(45) Veröffentlichungstag und Bekanntmachung des Hinweises auf die Patenterteilung: **22.04.2020**
(21) Anmeldenummer: 18190946.6
(22) Anmeldetag: 27.08.2018
(51) Int. Cl.: B60P 1/64

(54) **LASTENTRANSPORTFAHRZEUG MIT EINER HANDHABUNGSVORRICHTUNG UND VERFAHREN ZUM BETREIBEN DAVON**
TRUCK WITH A HANDLING DEVICE AND METHOD FOR OPERATING THE SAME
VÉHICULE DE TRANSPORT DE CHARGES DOTÉ D'UN DISPOSITIF DE MANUTENTION ET PROCÉDÉ DE FONCTIONNEMENT CORRESPONDANT

(30) Priorität: 28.08.2017 DE 102017214982
(43) Veröffentlichungstag der Anmeldung: 06.03.2019
(73) Patentinhaber: Franz Xaver Meiller Fahrzeug- und Maschinenfabrik - GmbH & Co KG, 80997 München (DE)
(72) Erfinder: Florian, KIBLER, 81243 München (DE)
(74) Vertreter: Weickmann & Weickmann PartmbB

(56) Entgegenhaltungen:
- DE-A1- 19 756 551
- DE-A1-102006 057 610

## Beschreibung

Die vorliegende Erfindung betrifft ein Lastentransportfahrzeug, das dazu eingerichtet ist, einen Wechselbehälter aufzunehmen und zu transportieren, und welches wenigstens eine Handhabungsvorrichtung für den Wechselbehälter umfasst, wobei das Lastentransportfahrzeug ferner eine Steuerungsvorrichtung umfasst, welche dazu eingerichtet ist, die Handhabungsvorrichtung gemäß wenigstens einem vordefinierten Ablaufprogramm zu betreiben. Zum Beispiel in DE 102006057610 A1 erfolgt eine vollautomatische Fahrzeughöhenregelung zum Andocken an eines Zielobjekt.

Bei derartigen Lastentransportfahrzeugen kann es sich insbesondere um Absetzkipper und Abrollkipper handeln. Derartige Absetzkipper und Abrollkipper weisen eine Handhabungsvorrichtung auf, die insbesondere zum Absetzen bzw. Abrollen des Wechselbehälters vorgesehen ist, sowie zum Aufnehmen von abgesetzten bzw. abgerollten Wechselbehältern. Hierbei sind die Wechselbehälter häufig äußerst schwer und ihr Gewicht kann im beladenen Zustand mehr als zehn Tonnen betragen. Somit besteht prinzipiell eine erhebliche Gefahr beim Betrieb der Handhabungsvorrichtung, insbesondere beim Ansetzen oder Abrollen des Wechselbehälters, Gegenstände, Gebäude oder gar Personen zu schädigen.
Hierbei ist einerseits bekannt, manuell von einem Benutzer betätigbare Handhabungsvorrichtungen in derartigen Fahrzeugen vorzusehen, wobei die Verantwortung für ein sicheres Abladen des Wechselbehälters dementsprechend bei dem Benutzer liegt und er Sorge dafür zu tragen hat, dass der gesamte durch den Wechselvorgang betroffene Bereich während einer Betätigung der Handhabungsvorrichtung in seinem Blickfeld ist und frei von Gegenständen oder Personen ist, die durch das Absetzen des Wechselbehälters geschädigt werden könnten.

Um sicherzugehen, dass der Benutzer der Aufgabe des Überwachens des Abladebereichs des Wechselbehälters nachgehen kann, muss er sich zur Betätigung der Handhabungsvorrichtung aus seinem Fahrerhaus hinaus begeben, da nur von Positionen seitlich oder hinter dem Lastentransportfahrzeug aus dem Benutzer für eine derartige Betätigung ein geeignetes Sichtfeld zur Verfügung steht. Somit kann ein erheblicher Zeitverlust durch das Aussteigen aus dem Fahrzeug und das Einnehmen einer entsprechenden Position durch den Benutzer anfallen. Dieser Zeitverlust kann sich weiter verstärken, wenn die Handhabung des Wechselbehälters in beengten Verhältnissen stattzufinden hat und das Lastentransportfahrzeug somit zunächst in eine geeignete Position rangiert werden muss, um den Wechselbehälter an der vorgesehenen Stelle abzuladen und/oder von der entsprechenden Stelle aufzuladen. Dies kann dazu führen, dass der Benutzer mehrfach aus dem Lastentransportfahrzeug aussteigen bzw. wieder in dieses einsteigen muss, um sich nach und nach an eine geeignete Abstellposition des Fahrzeugs heranzutasten, von der aus er die vorgesehene Handhabung des Wechselbehälters durchführen kann.

Zwar sind beispielsweise in der DE 10 2008 060 767 A1 und der DE 10 2008 028 434 A1 Fahrzeuge vorgeschlagen worden, die an ihrer Ladebordwand eine Kamera aufweisen, mit der sie den Nahbereich um den Bewegungsraum einer Ladebordwand herum überwachen und das Signal an einen Bildschirm im Fahrerhaus übertragen können, diese Systeme sind allerdings für Lastentransportfahrzeuge mit entsprechend schweren Wechselbehältern ungeeignet, da aufgrund der Gefahren eines unsachgemäßen Absetzens eines derartigen Wechselbehälters eine Darstellung allein des Nahbereichs hinter dem Lastentransportfahrzeug aus Sicherheitsgründen unzureichend ist, um einen Abladevorgang zuverlässig kontrollieren zu können. Außerdem ist das Überwachen der Umgebung eines Lastentransportfahrzeugs lediglich auf der Grundlage von durch Kameras aufgenommenen Bildern der Umgebung für einen Benutzer umständlich, da ein hohes Maß an Abstraktion und räumlichem Vorstellungsvermögen hierfür erforderlich ist.

Es ist daher in letzter Zeit vorgeschlagen worden, automatisierte Handhabungsvorrichtungen an Lastentransportfahrzeugen vorzusehen, die die einzelnen Handhabungsvorgänge gemäß vordefinierter Ablaufprogramme durchführen können. Hierzu werden die einzelnen möglichen und gewünschten Vorgänge definiert, die durch die Handhabungsvorrichtung durchzuführen sein können, und im Betrieb der Handhabungsvorrichtung wird diese von einer Steuerungsvorrichtung angesteuert, die dann die Handhabungsvorrichtung und ihre an dem Handhabungsvorgang beteiligten Komponenten gemäß dem entsprechend vordefinierten Ablaufprogramm sequenziell und/oder parallel ansteuert.

Derartige vordefinierte Ablaufprogramme eignen sich allerdings nur zur Verwendung mit jeweils einem einzelnen Typ von Wechselbehälter, da die sequenziell durchzuführenden Handhabungsvorgänge entscheidend von den Abmessungen, Verriegelungsmaßen und der Ausführung des jeweiligen Behälters abhängen. Zwar sind derartige Wechselbehälter häufig genormt, es können jedoch auch von der Norm abweichend konstruierte Behälter vorgesehen sein und auch genormte Wechselbehälter können sich in vielerlei Aspekten voneinander unterscheiden.

Jedoch ist andererseits auch gewünscht, dass die jeweiligen Nutzfahrzeugaufbauten an gattungsgemäßen Lastentransportfahrzeugen in einer Weise flexibel konstruiert und aufgebaut sind, dass sie ein möglichst breites Spektrum von Behältern aufnehmen und handhaben können. Um die derart gewonnene Flexibilität allerdings in den produktiven Einsatz zu bringen, ist es bisher unerlässlich, eine manuelle Steuerung des Betriebs der Handhabungsvorrichtung mit den oben genannten Nachteilen vorzusehen. Selbst wenn hierbei ein Benutzer den jeweiligen momentanen Typ von in Verwendung befindlichem Wechselbehälter an einem Bedienteil einer Steuerungsvorrichtung manuell auswählen müsste, so bestünde weiterhin ein erhebliches Risiko einer fehlerhaften Auswahl des Typs von Wechselbehälter mit den oben genannten möglichen katastrophalen Folgen.

Angesichts der genannten Nachteile von bekannten Lastentransportfahrzeugen ist es eine Aufgabe der vorliegenden Erfindung, ein gattungsgemäßes Fahrzeug bereitzustellen, das einen hochgradig automatisierten und integrierten Betrieb seiner Handhabungsvorrichtung und damit Zeit- und Kostenersparnis ermöglicht, während es gleichzeitig für eine verbesserte Betriebssicherheit sorgt und den Bedienkomfort für seinen Benutzer erhöht.

Hierzu umfasst das erfindungsgemäße Lastentransportfahrzeug ferner wenigstens eine Erfassungseinrichtung, die dazu eingerichtet ist, wenigstens eine Eigenschaft des Wechselbehälters zu erfassen und Daten, welche die wenigstens eine Eigenschaft des Wechselbehälters repräsentieren, an die Steuerungsvorrichtung auszugeben, wobei die Steuerungsvorrichtung ferner dazu eingerichtet ist, das wenigstens eine vordefinierte Ablaufprogramm anhand der wenigstens einen erfassten Eigenschaft des Wechselbehälters anzupassen.

Durch das Vorsehen der Erfassungseinrichtung und das Anpassen des wenigstens einen vordefinierten Ablaufprogramms anhand wenigstens einer relevanten Eigenschaft des Wechselbehälters wird es ermöglicht, für beliebige Typen von Wechselbehältern geeignete Ablaufprogramme in hochgradig automatisierter Weise bereitzustellen, so dass die Flexibilität des Lastentransportfahrzeugs und seiner Handhabungsvorrichtung deutlich erhöht werden kann, während die Eingriffe des Benutzers lediglich darauf beschränkt werden, das jeweilige Ablaufprogramm auszuwählen, woraufhin dann die Steuerungsvorrichtung die Handhabungsvorrichtung unter Einbeziehung der wenigstens einen Eigenschaft des Wechselbehälters anhand des entsprechenden Ablaufprogramms betreibt.

Eine fehlerhafte Einschätzung der Maße des Wechselbehälters kann somit ebenso ausgeschlossen werden wie der oben genannte erheblich Zeitverlust bei einem Aussteigen aus dem und einem erneuten Einsteigen in das Lastentransportfahrzeug, da die entsprechenden Anweisungen durch den Fahrer ohne Weiteres von seiner Position in seinem Fahrersitz aus durchgeführt werden können und daher ein Absteigen von dem Fahrzeug nicht mehr erforderlich wird.

Zudem könnten in einem erfindungsgemäßen Lastentransportfahrzeug neben der Handhabungsvorrichtung noch eine oder mehrere weitere Komponenten vorgesehen sein, deren Betrieb anhand der erfassten wenigstens einen Eigenschaft des Wechselbehälters angepasst wird. Beispielhaft sei hier ein am Heck oder an der Seite des Fahrzeugs vorgesehener und als Sicherheitsvorrichtung dienender Unterfahrschutz angesprochen. Die Relativposition dieses Unterfahrschutzes gegenüber dem Fahrzeugkörper könnte dementsprechend an die Maße und insbesondere die Länge bzw. Breite des Wechselbehälters anpassbar sein, um auch bei verschieden weit über den Fahrzeugkörper überstehenden Wechselbehältern ein Unterfahren von diesen stets zuverlässig zu verhindern.

In einer möglichen Ausführungsform könnte die Erfassungseinrichtung dazu eingerichtet sein, die wenigstens eine Eigenschaft des Wechselbehälters optisch oder mittels akustischer oder elektromagnetischer Wellen zu erfassen, beispielsweise mittels Ultraschall oder Radar. Mit dieser Technik ließe sich insbesondere die Außenkontur des Wechselbehälters erfassen, also beispielsweise Eigenschaften wie die Höhe oder Breite des Wechselbehälters, da diese besonders gut durch optische oder akustische Erfassungsmittel erfassbar sind.

Alternativ kann die Erfassungseinrichtung dazu eingerichtet sein, einen dem Wechselbehälter zugeordneten Datenträger auszulesen, um die wenigstens eine Eigenschaft des Wechselbehälters zu erfassen. Bei dem Datenträger kann es sich einerseits um einen optisch lesbaren Datenträger, wie beispielsweise einen Strichcode, QR-Code oder Ähnliches, handeln, andererseits aber auch um einen mittels elektromagnetischer Induktion auslesbaren Datenträger, wie zum Beispiel einen RFID-Chip oder Ähnliches, oder gar ein elektronischer Speicher, mit dem über geeignete Mittel eine Datenverbindung hergestellt wird.

Ferner kann das erfindungsgemäße Lastentransportfahrzeug wenigstens eine weitere Erfassungseinrichtung umfassen, die dazu eingerichtet ist, Informationen über den momentanen Betriebszustand des Fahrzeugs, insbesondere der Handhabungseinrichtung, und/oder seine Umgebung an die Steuerungsvorrichtung zu liefern, wobei die Steuerungsvorrichtung einerseits dazu eingerichtet sein kann, das Ablaufprogramm ebenfalls anhand dieser Informationen anzupassen. Hierbei kann in ähnlicher Weise wie eben beschrieben an optische, akustische oder auf elektromagnetischen Wellen basierende Erfassungseinrichtungen gedacht werden, um beispielsweise die Umgebung des Lastentransportfahrzeugs dahingehend zu untersuchen, von welcher Beschaffenheit der Untergrund ist, auf dem der Wechselbehälter abgesetzt werden soll. Dementsprechend kann beispielsweise bei einer Erfassung einer Neigung des Untergrunds das Ablaufprogramm hieran angepasst werden. Ähnliches kann ferner gelten, wenn durch die wenigstens eine weitere Erfassungseinrichtung detektiert wird, dass das Lastentransportfahrzeug selbst auf einem abschüssigen Untergrund aufsteht, so dass auch eine Anpassung des Ablaufprogramms an derartige Gegebenheiten vorgesehen werden kann. Indem die Handhabungsvorrichtung selbst mittels einer weiteren Erfassungseinrichtung überwacht wird, kann eine Regelschleife etabliert werden, in der durch Rückkopplung von erfassten Betriebszuständen der Handhabungseinrichtung während ihres Betriebs in Echtzeit Betriebsparameter angepasst werden und/oder in der auf Grundlage der erfassten Betriebszustände das wenigstens eine Ablaufprogramm für spätere erneute Durchführungen editiert wird.

Wie bereits mehrfach angedeutet, kann die Handhabungsvorrichtung eine Wechselvorrichtung zum Wechseln, Auf- und/oder Abladen des Wechselbehälters und/oder eine Ladungssicherungsvorrichtung und/oder eine Entleerungseinrichtung jeweils für den Wechselbehälter umfassen. Jede der genannten Handhabungsvorrichtungen kann in der oben beschriebenen Weise durch das erfindungsgemäße Vorsehen der Erfassungseinrichtung und die entsprechende Anpassung von wenigstens einem Ablaufprogramm einen erhöhten Automatisierungsgrad und damit eine gesteigerte Effizienz erreichen.

Weiterhin wird vorliegend Schutz begehrt für ein System, gebildet aus einem erfindungsgemäßen Lastentransportfahrzeug und einem Wechselbehälter, welchem ein von der Erfassungsvorrichtung des Lastentransportfahrzeugs auslesbarer Datenträger zugeordnet ist, wobei der Datenträger beispielsweise ein kontaktlos auslesbarer Datenträger sein kann, wie beispielsweise ein optisch lesbarer Code oder ein RFID-Tag.

In einem zweiten Aspekt der Erfindung betrifft diese ein Verfahren zum Betreiben einer Handhabungsvorrichtung eines Lastentransportfahrzeugs, beispielsweise eines erfindungsgemäßen Lastentransportfahrzeugs wie oben beschrieben, welche Handhabungsvorrichtung dazu eingerichtet ist, einen Wechselbehälter aufzunehmen und zu transportieren, und welches Lastentransportfahrzeugs ferner eine Steuerungsvorrichtung für die Handhabungsvorrichtung umfasst, wobei das erfindungsgemäße Verfahren die Schritte eines Hinterlegens wenigstens eines vordefinierten Ablaufprogramms für die Handhabungsvorrichtung in einem der Steuerungsvorrichtung zugeordneten Speicher, eines Erfassens wenigstens einer Eigenschaft des Wechselbehälters durch wenigstens eine dem Fahrzeug zugeordnete Erfassungseinrichtung und eines Anpassens des wenigstens einen Ablaufprogramms anhand der erfassten Eigenschaft umfasst.

Hierbei kann das erfindungsgemäße Verfahren ferner in dem Schritt des Hinterlegens des wenigstens einen vordefinierten Ablaufprogramms das Anlegen einer Datenbank umfassen, in welcher Eigenschaften wenigstens eines Typs von Wechselbehälter hinterlegt sind, das Erfassen der wenigstens einen Eigenschaft, ein Erfassen des Typs des Wechselbehälters umfassen und die für den entsprechenden Typ des Wechselbehälters hinterlegten Eigenschaften zum Anpassen des Ablaufprogramms verwendet werden.

Auf diese Weise wird zwar einerseits die Flexibilität des erfindungsgemäßen Verfahrens in gewissem Maße verringert, da ein Anpassen des Ablaufprogramms nur noch für Typen von Wechselbehältern stattfinden kann, deren entsprechende Eigenschaften in der Datenbank hinterlegt sind, andererseits kann aber die von der Erfassungseinrichtung zu erfassende Datenmenge deutlich reduziert werden, da letztlich nur eine Codierung des jeweiligen Typs von Wechselbehälter ausgelesen werden muss.

Dem hingegen kann ein Erfassen der entsprechenden Eigenschaften des Wechselbehälters eine Codierung größerer Datenmengen erforderlich machen, je nachdem, welche und wie viele Eigenschaften in welchem Format durch die Erfassungseinrichtung durch Erfassen des Wechselbehälters zur Verfügung gestellt werden müssen.

In dem Fall, dass die entsprechenden Eigenschaften nicht aus einer Datenbank gelesen werden, sondern durch die Erfassungseinrichtung direkt erfasst werden, können die derart erfassten Eigenschaften beispielsweise als Parameter in einer Parametrisierung des Ablaufprogramms verwendet werden, während bei Einlesen einer Datenbank entweder ebenfalls Parameter für eine Parametrisierung des Ablaufprogramms in der Datenbank abgelegt sein können oder auch direkt das Ablaufprogramm für den jeweils erfassten Typ in einer geeignet formulierten Codierung.

Im Fall einer Verwendung einer Datenbank, in der beispielsweise Schlüssel-Wert-Paare für die verschiedenen Typen von Wechselbehältern abgelegt sind, können in einer Ausführungsform in einem Fall, in dem einem erfassten Typ von Wechselbehälter keine Parameter in der Datenbank zugeordnet sind, vorbestimmte Ausweichparameter verwendet werden.

Wie bereits weiter oben angesprochen, kann das Erfassen der wenigstens einen Eigenschaft des Wechselbehälters mit den beschriebenen Techniken kontaktlos erfolgen. Andererseits könnte das Erfassen der wenigstens einen Eigenschaft des Wechselbehälters auch ein Herstellen einer kabelgebundenen Datenverbindung zwischen der Erfassungseinheit und einer dem Wechselbehälter zugeordneten Speichereinheit umfassen.

Das erfindungsgemäße Verfahren kann ferner ein Erfassen von Informationen über den momentanen Betriebszustand des Fahrzeugs und/oder seine Umgebung durch wenigstens eine weitere Erfassungseinheit und ein Anpassen des Ablaufprogramms anhand dieser Informationen umfassen, wobei das Ablaufprogramm beispielsweise einen Wechsel-, Auflade-, Ablade- und/oder Entladevorgang des Wechselbehälters betreffen kann.

Weitere Eigenschaften und Vorteile der vorliegenden Erfindung werden aus der nachfolgenden Beschreibung deutlich, wenn diese zusammen mit den beiliegenden Figuren betrachtet wird, die im Einzelnen zeigen:
Figur 1a ein erfindungsgemäßes Lastentransportfahrzeug mit von der Wechselvorrichtung erhaltenem Wechselbehälter;
Figur 1b das Lastentransportfahrzeug aus Figur 1a bei einem Abladen des Wechselbehälters;
Figur 2 ein schematisches Schaltungsdiagramm der Komponenten des Fahrzeugs aus den Figuren 1a und 1b.

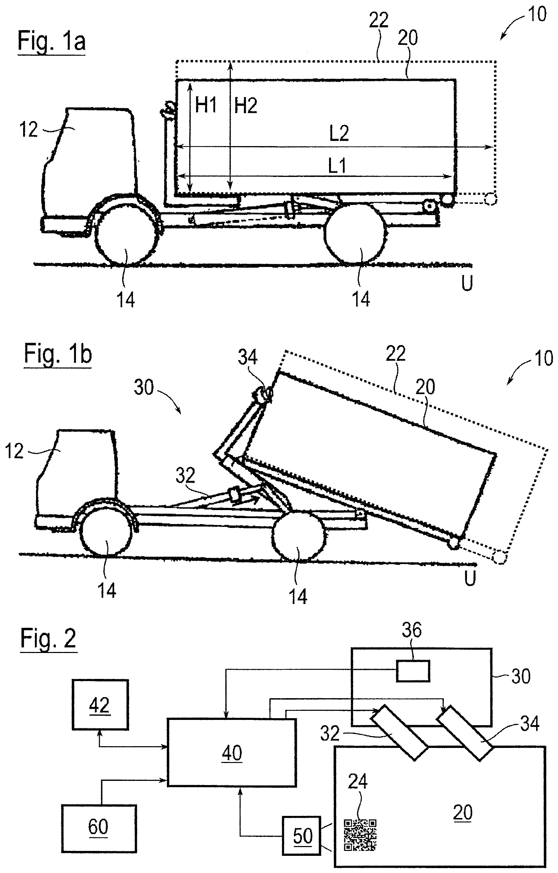

In den Figuren 1a und 1b ist jeweils ein erfindungsgemäßes Lastentransportfahrzeug gezeigt und ganz allgemein mit dem Bezugszeichen 10 bezeichnet. Bei dem Lastentransportfahrzeug 10 handelt es sich in der gezeigten Ausführung um einen Abrollkipper, der an sich bekannte Komponenten aufweist, wie beispielsweise ein Führerhaus 12 und zwei Paare von Rädern 14, mit denen das Fahrzeug 10 auf einem Untergrund U aufsteht und sich auf diesem fortbewegen kann.

Im hinteren Bereich des Lastentransportfahrzeugs 10 steht in den Figuren 1a und 1b auf diesem ein Wechselbehälter 20 auf, der von einem ersten Typ ist und eine Höhe H1 sowie eine Länge L1 aufweist. Dieser erste Wechselbehälter 20 ist in den Figuren 1a und 1b mit einer durchgezogenen Linie dargestellt. Mit einer gestrichelten Linie ist ferner ein zweiter Wechselbehälter 22 dargestellt, der anstelle des ersten Wechselbehälters 20 von dem Lastentransportfahrzeug 10 transportiert werden kann und der eine Höhe H2 sowie eine Länge L2 aufweist, die jeweils größer sind als die entsprechenden Abmessungen des ersten Wechselbehälters 20.

Der Wechselbehälter 20 bzw. 22 ist in Figur 1a mittels einer Wechselvorrichtung 30 an dem Lastentransportfahrzeug 10 gehaltert, deren Komponenten in der Figur 1b noch einmal deutlicher zu erkennen sind. Die Figur 1b zeigt hierbei einen Abladevorgang für die Wechselbehälter 20 bzw. 22, der derart vorgenommen wird, dass durch Betätigung eines Hubzylinders 32 der Wechselbehälter 20 bzw. 22 nach hinten und unten gekippt wird. Während dieses Kippvorgangs wird der Wechselbehälter 20 bzw. 22 von einer Verriegelungseinrichtung 34 gehalten, die ebenfalls einen Teil der Wechselvorrichtung 30 bildet. Hierbei entspricht die angesprochene Wechselvorrichtung 30 der erfindungsgemäßen Handhabungsvorrichtung.

Wie sich ebenfalls aus Figur 1b erkennen lässt, wird der zweite Wechselbehälter 22 verglichen mit dem ersten Wechselbehälter 20 bei einem durch die Handhabungsvorrichtung 30 durchgeführten Absetzvorgang zu einem früheren Zeitpunkt mit dem Untergrund U in Kontakt kommen. Dementsprechend kann in einem Fall, in dem der von der Handhabungsvorrichtung durchgeführte Absetzvorgang für den Wechselbehälter 20 bzw. 22 gemäß einem vorbestimmten Ablaufprogramm durchgeführt wird, das beispielsweise das Ausfahren des Hubzylinders 32 verlangsamen soll, sobald der entsprechende Wechselbehälter 20 bzw. 22 mit dem Untergrund U in Kontakt gekommen ist, nicht für beide Wechselbehälter 20 bzw. 22 in gleicher Weise durchgeführt werden.

Um dennoch eine automatisierte Handhabung der verschiedenen Wechselbehälter 20 und 22 durch die Wechselvorrichtung 30 zu ermöglichen, umfasst das erfindungsgemäße Fahrzeug 10 die in Figur 2 grob schematisch dargestellten Komponenten.

Diese umfassen eine Steuerungsvorrichtung 40, die die bereits beschriebenen Komponenten Hubzylinder 32 und Verriegelungsvorrichtung 34 der Handhabungsvorrichtung 30 gemäß dem ebenfalls bereits angesprochenen Ablaufprogramm ansteuert. Die Steuerungsvorrichtung 40 kann in einer zentralen Steuereinheit des Fahrzeugs 10 integriert sein oder mit dieser in Datenaustausch stehen. Der Komponenten der Handhabungsvorrichtung 30 sind in Figur 2 schematisch derart dargestellt, dass sie mit dem Wechselbehälter 20 eingreifen, entsprechend der Darstellung aus den Figuren 1a und 1b.

Um nun die erfindungsgemäße Anpassung des Ablaufprogramms vornehmen zu können, umfasst das Lastentransportfahrzeug 10 eine optische Erfassungseinrichtung 50, die beispielsweise als Kameramodul mit einer integrierten Bilderkennungs- und Bildauswertungseinheit ausgeführt ist. Diese ist in dem Fahrzeug 10 an einer Position angeordnet, an der sie in einem Zustand, in dem der Wechselbehälter 20 in dem Fahrzeug aufgenommen ist bzw. von dem Fahrzeug aufnehmbar ist, ein freies Sichtfeld auf einen an einer vorbestimmten Stelle an dem Wechselbehälter 20 vorgesehenen optisch lesbaren Code 24, in diesem Fall ein QR-Code, hat. Die optische Erfassungseinrichtung 50 bildet den QR-Code ab und liest die in ihm codierten Informationen aus, um sie anschließend an die Steuerungseinrichtung 40 zu liefern.

Dieser Steuerungseinrichtung 40 ist ferner ein Speichermodul 42 zugeordnet, in dem eine Datenbank abgelegt ist, in der Schlüssel-Wert-Paare für verschiedene Typen von Wechselbehältern gespeichert sind, einschließlich der beiden in den Figuren 1a und 1b gezeigten Wechselbehälter 20 und 22. Anhand der in dieser Datenbank abgelegten Werte kann nun die Steuerungseinrichtung 40 das Ablaufprogramm an den von der Erfassungseinrichtung 50 erfassten Wechselbehälter 20 bzw. 22 anpassen und die Komponenten 32 und 34 der Handhabungseinrichtung 30 dementsprechend ansteuern. Hierzu ist kein weiterer Eingriff durch den Fahrer des Fahrzeugs 10 erforderlich, vielmehr muss dieser lediglich den gewünschten Handhabungsvorgang auswählen, was beispielsweise an einem in der Fahrerkabine 12 vorgesehenen Bedienelement geschehen kann.

Des Weiteren erhält die Steuerungseinrichtung 40 auch noch Informationen von weiteren Erfassungseinrichtungen 36 und 60, wobei die erste weitere Erfassungseinrichtung 36 der Handhabungsvorrichtung 30 zugeordnet ist und einen momentanen Betriebszustand dieser Handhabungseinrichtung 30 erfasst, wie beispielsweise einen momentan auf den Hubzylinder 32 wirkenden Widerstand. Der Widerstand kann ein Maß dafür sein, ob entsprechende Wechselbehälter 20 bzw. 22 bereits mit dem Untergrund U in dem in Figur 1b gezeigten Zustand in Kontakt ist, so dass auf diese Weise das momentan durchgeführte Ablaufprogramm verifiziert werden kann und ggf. ein Regelungsprozess in Gang gesetzt werden kann, der bei einem unerwarteten Verhalten beispielsweise die Einträge in der Datenbank im Speicher 42 anpassen kann.

Des Weiteren liefert die zweite weitere Erfassungseinrichtung 60 Informationen über die Umgebung des Fahrzeugs 10, beispielsweise kann sie radargestützt mögliche Hindernisse erfassen, die sich im Bereich befinden, in dem der Wechselbehälter 20 bzw. 22 abgesetzt werden soll, so dass auch eine Anpassung des Ablaufprogramms an derartige Gegebenheiten erfolgen kann, wie beispielsweise ein Abbruch des momentan durchgeführten Ablaufprogramms, wenn ein derartiges Hindernis erfasst wird, oder ein Ausgeben einer Warnung an den Benutzer.

## Patentansprüche

1. Lastentransportfahrzeug, welches dazu eingerichtet ist, einen Wechselbehälter (20, 22) verschiedener Typen aufzunehmen und zu transportieren, und welches eine Handhabungsvorrichtung (30) für den Wechselbehälter (20, 22) umfasst,
ferner umfassend eine Steuerungsvorrichtung (40), welche dazu eingerichtet ist, die Handhabungsvorrichtung (30) gemäß wenigstens einem vordefinierten Ablaufprogramm zu betreiben,
**dadurch gekennzeichnet, dass**
das Lastentransportfahrzeug ferner wenigstens eine Erfassungseinrichtung (50) umfasst, welche dazu eingerichtet ist, wenigstens eine Eigenschaft des Typs des Wechselbehälters (20, 22) zu erfassen und Daten, welche die wenigstens eine Eigenschaft des Wechselbehälters (20, 22) repräsentieren, an die Steuerungsvorrichtung (40) auszugeben,
wobei die Steuerungsvorrichtung (40) ferner dazu eingerichtet ist, das wenigstens eine vordefinierte Ablaufprogramm anhand der wenigstens einen Eigenschaft des Wechselbehälters (20, 22) anzupassen.

2. Lastentransportfahrzeug nach Anspruch 1,
**dadurch gekennzeichnet, dass** die Erfassungseinrichtung dazu eingerichtet ist, die wenigstens eine Eigenschaft des Wechselbehälters optisch oder mittels akustischer oder elektromagnetischer Wellen zu erfassen.

3. Lastentransportfahrzeug nach Anspruch 1,
**dadurch gekennzeichnet, dass** die Erfassungseinrichtung (50) dazu eingerichtet ist, einen dem Wechselbehälter (20, 22) zugeordneten Datenträger (24) auszulesen, um die wenigstens eine Eigenschaft des Wechselbehälters (20, 22) zu erfassen.

4. Lastentransportfahrzeug nach einem der Ansprüche 1 bis 3,
**dadurch gekennzeichnet, dass** es ferner wenigstens eine weitere Erfassungseinrichtung (36, 60) umfasst, welche dazu eingerichtet ist, Informationen über den momentanen Betriebszustand des Fahrzeugs, insbesondere der Handhabungsvorrichtung (30), und/oder seine Umgebung an die Steuerungsvorrichtung (40) zu liefern, wobei die Steuerungsvorrichtung (40) ferner dazu eingerichtet ist, das Ablaufprogramm ebenfalls anhand dieser Informationen anzupassen.

5. Lastentransportfahrzeug nach einem der vorhergehenden Ansprüche,
**dadurch gekennzeichnet, dass** die Handhabungsvorrichtung (30) eine Wechselvorrichtung zum Wechseln, Auf- und/oder Abladen des Wechselbehälters und/oder eine Ladungssicherungsvorrichtung und/oder eine Entleerungseinrichtung umfasst.

6. System, gebildet aus einem Lastentransportfahrzeug (10) nach einem der Ansprüche 3 bis 6 und einem Wechselbehälter (20, 22), welchem ein von der Erfassungsvorrichtung (50) des Lastentransportfahrzeugs (10) auslesbarer Datenträger (24) zugeordnet ist.

7. System nach Anspruch 6,
**dadurch gekennzeichnet, dass** der Datenträger (24) ein kontaktlos auslesbarer Datenträger ist, beispielsweise ein optisch lesbarer Code oder ein RFID-Tag.

8. Verfahren zum Betreiben einer Handhabungsvorrichtung (30) eines Lastentransportfahrzeugs (10), nach einem der Ansprüche 1 bis 5, welches dazu eingerichtet ist, einen Wechselbehälter (20, 22) aufzunehmen und zu transportieren, und welches ferner eine Steuerungsvorrichtung (40) für die Handhabungsvorrichtung (30) umfasst, **gekennzeichnet durch** die folgenden Schritte:
- Hinterlegen wenigstens eines vordefinierten Ablaufprogramms für die Handhabungsvorrichtung (30) in einem der Steuerungsvorrichtung (40) zugeordneten Speicher (42);
- Erfassen wenigstens einer Eigenschaft des Wechselbehälters (20, 22) durch wenigstens eine dem Fahrzeug (20) zugeordnete Erfassungseinrichtung (50); und
- Anpassen des wenigstens einen Ablaufprogramms anhand der erfassten Eigenschaft.

9. Verfahren nach Anspruch 8,
**dadurch gekennzeichnet, dass** das Hinterlegen des wenigstens einen vordefinierten Ablaufprogramms ferner das Anlegen einer Datenbank umfasst, in welcher Eigenschaften wenigstens eines Typs von Wechselbehälter (20, 22) hinterlegt sind, das Erfassen der wenigstens einen Eigenschaft ein Erfassen des Typs des Wechselbehälters (20, 22) umfasst und die für den entsprechenden Typ des Wechselbehälters (20, 22) hinterlegten Eigenschaften zum Anpassen des Ablaufprogramms verwendet werden.

10. Verfahren nach Anspruch 9,
**dadurch gekennzeichnet, dass** in einem Fall, in welchem dem erfassten Typ von Wechselbehälter (20, 22) keine Parameter in der Datenbank zugeordnet sind, vorbestimmte Ausweich-Parameter verwendet werden.

11. Verfahren nach einem der Ansprüche 8 bis 10,
**dadurch gekennzeichnet, dass** das Erfassen der wenigstens einen Eigenschaft des Wechselbehälters (20, 22) kontaktlos erfolgt.

12. Verfahren nach einem der Ansprüche 8 bis 11,
**dadurch gekennzeichnet, dass** das Erfassen der wenigstens einen Eigenschaft des Wechselbehälters (20, 22) ein Herstellen einer kabelgebundenen Datenverbindung zwischen der Erfassungseinheit und einer dem Wechselbehälter zugeordneten Speichereinheit umfasst.

13. Verfahren nach einem der Ansprüche 8 bis 12,
**dadurch gekennzeichnet, dass** es ferner ein Erfassen von Informationen über den momentanen Betriebszustand des Fahrzeugs (10) und/oder seine Umgebung durch wenigstens eine weitere Erfassungseinheit (36, 60) und ein Anpassen des Ablaufprogramms anhand dieser Informationen umfasst.

14. Verfahren nach einem der Ansprüche 8 bis 13, **dadurch gekennzeichnet, dass** das Ablaufprogramm einen Wechsel-, Auflade-, Ablade- und/oder Entladevorgang des Wechselbehälters (20, 22) betrifft

## Claims

1. Load transport vehicle, which is designed to receive and transport an interchangeable container (20, 22) of various types, and which comprises a handling device (30) for the interchangeable container (20, 22), further comprising a control device (40), which is designed to operate the handling device (30) in accordance with at least one predefined sequence program, **characterised in that** the load transport vehicle further comprises at least one detection means (50) which is designed to detect at least one property of the type of the interchangeable container (20, 22) and output data which represent the at least one property of the interchangeable container (20, 22) to the control device (40), the control device (40) being further designed to adapt the at least one predefined sequence program based on the at least one property of the interchangeable container (20, 22).

2. Load transport vehicle according to claim 1, **characterised in that** the detection means is designed to detect the at least one property of the interchangeable container optically or by means of acoustic or electromagnetic waves.

3. Load transport vehicle according to claim 1, **characterised in that** the detection means (50) is designed to read a data carrier (24) assigned to the interchangeable container (20, 22) in order to detect the at least one property of the interchangeable container (20, 22).

4. Load transport vehicle according to any of claims 1 to 3, **characterised in that** it further comprises at least one further detection means (36, 60) which is designed to provide information regarding the current operating state of the vehicle, in particular of the handling device (30), and/or its surroundings to the control device (40), the control device (40) being further designed to adapt the sequence program also on the basis of this information.

5. Load transport vehicle according to any of the preceding claims, **characterised in that** the handling device (30) comprises a changing device for changing, loading and/or unloading the interchangeable container and/or a load securing device and/or an emptying means.

6. System, formed by a load transport vehicle (10) according to any of claims 3 to 6 and an interchangeable container (20, 22) to which a data carrier (24) that can be read by the detection device (50) of the load transport vehicle (10) is assigned.

7. System according to claim 6, **characterised in that** the data carrier (24) is a contactlessly readable data carrier, for example an optically readable code or an RFID tag.

8. Method for operating a handling device (30) of a load transport vehicle (10) according to any of claims 1 to 5, which is designed to receive and transport an interchangeable container (20, 22), and which further comprises a control device (40) for the handling device (30), **characterised by** the following steps:
- storing at least one predefined sequence program for the handling device (30) in a memory (42) assigned to the control device (40);
- detecting at least one property of the interchangeable container (20, 22) by means of at least one detection means (50) assigned to the vehicle (20); and
- adapting the at least one sequence program based on the detected property.

9. Method according to claim 8, **characterised in that** the storage of the at least one predefined sequence program further comprises the creation of a database in which properties of at least one type of interchangeable container (20, 22) are stored, the detection of the at least one property comprises detecting the type of interchangeable container (20, 22), and the properties stored for the corresponding type of interchangeable container (20, 22) are used for adapting the sequence program.

10. Method according to claim 9, **characterised in that** if no parameters are assigned to the detected type of interchangeable container (20, 22) in the database, predetermined fallback parameters are used.

11. Method according to any of claims 8 to 10, **characterised in that** the detection of the at least one property of the interchangeable container (20, 22) is carried out contactlessly.

12. Method according to any of claims 8 to 11, **characterized in that** the detection of the at least one property of the interchangeable container (20, 22) comprises establishing a wired data connection between the detection unit and a memory unit assigned to the interchangeable container.

13. Method according to any of claims 8 to 12, **characterised in that** it further comprises detecting information regarding the current operating state of the vehicle (10) and/or its surroundings by means of at least one other detection unit (36, 60) and comprises adapting the sequence program based on this information.

14. Method according to any of claims 8 to 13, **characterised in that** the sequence program relates to a changing, loading, unloading and/or off-loading process of the interchangeable container (20, 22).

## Revendications

1. Véhicule de transport de charges, lequel est mis au point pour recevoir et pour transporter un conteneur interchangeable (20, 22) de différents types et lequel comprend un dispositif de manutention (30) pour le conteneur interchangeable (20, 22),
comprenant en outre un dispositif de commande (40), lequel est mis au point pour faire fonctionner le dispositif de manutention (30) selon au moins un programme de déroulement prédéfini,
**caractérisé en ce que**
le véhicule de transport de charges comprend en outre au moins un système de détection (50), lequel est mis au point pour détecter au moins une propriété du type du conteneur interchangeable (20, 22) et pour envoyer au dispositif de commande (40) des données, lesquelles représentent l'au moins une propriété du conteneur interchangeable (20, 22),
dans lequel le dispositif de commande (40) est mis au point en outre pour adapter l'au moins un programme de déroulement prédéfini à l'aide de l'au moins une propriété du conteneur interchangeable (20, 22).

2. Véhicule de transport de charges selon la revendication 1,
**caractérisé en ce que** le système de détection est mis au point pour détecter optiquement ou au moyen d'ondes acoustiques ou électromagnétiques l'au moins une propriété du conteneur interchangeable.

3. Véhicule de transport de charges selon la revendication 1,
**caractérisé en ce que** le système de détection (50) est configuré pour lire un support de données (24) associé au conteneur interchangeable (20, 22) pour détecter l'au moins une propriété du conteneur interchangeable (20, 22).

4. Véhicule de transport de charges selon l'une quelconque des revendications 1 à 3,
**caractérisé en ce qu'**il comprend en outre au moins un autre système de détection (36, 60), lequel est mis au point pour fournir au dispositif de commande (40) des informations sur l'état de fonctionnement instantané du véhicule, en particulier du dispositif de manutention (30), et/ou sur son environnement, dans lequel le dispositif de commande (40) est mis au point en outre pour adapter le programme de déroulement également à l'aide desdites informations.

5. Véhicule de transport de charges selon l'une quelconque des revendications précédentes, **caractérisé en ce que** le dispositif de manutention (30) comprend un dispositif de changement servant à changer, charger et/ou décharger le conteneur interchangeable et/ou un dispositif de blocage de chargement et/ou un système pour vider.

6. Système formé à partir d'un véhicule de transport de charges (10) selon l'une quelconque des revendications 3 à 6 et d'un conteneur interchangeable (20, 22), auquel est associé un support de données (24) pouvant être lu par le dispositif de détection (50) du véhicule de transport de charges (10).

7. Système selon la revendication 6,
**caractérisé en ce que** le support de données (24) est un support de données pouvant être lu sans contact, par exemple un code à lecture optique ou une étiquette RFID.

8. Procédé servant à faire fonctionner un dispositif de manutention (30) d'un véhicule de transport de charges (10) selon l'une quelconque des revendications 1 à 5, lequel est mis au point pour recevoir et transporter un conteneur interchangeable (20, 22), et lequel comprend en outre un dispositif de commande (40) pour le dispositif de manutention (30),
**caractérisé par** les étapes suivantes :
- l'enregistrement d'au moins un programme de déroulement prédéfini pour le dispositif de manutention (30) dans une mémoire (42) associée au dispositif de commande (40) ;
- la détection d'au moins une propriété du conteneur interchangeable (20, 22) par au moins un système de détection (50) associé au véhicule (20) ; et
- l'adaptation de l'au moins un programme de déroulement à l'aide de la propriété détectée.

9. Procédé selon la revendication 8,
**caractérisé en ce que** l'enregistrement de l'au moins un programme de déroulement prédéfini comprend en outre l'application d'une base de données, dans laquelle sont enregistrées des propriétés d'au moins un type de conteneur interchangeable (20, 22), la détection de l'au moins une propriété comprend une détection du type du conteneur interchangeable (20, 22) et les propriétés enregistrées pour le type correspondant du conteneur interchangeable (20, 22) sont utilisées pour adapter le programme de déroulement.

10. Procédé selon la revendication 9,
**caractérisé en ce que** dans un cas, dans lequel aucun paramètre dans la base de données n'est associé au type détecté de conteneur interchangeable (20, 22), des paramètres divergents prédéfinis sont utilisés.

11. Procédé selon l'une quelconque des revendications 8 à 10,
**caractérisé en ce que** la détection de l'au moins une propriété du conteneur interchangeable (20, 22) est effectuée sans contact.

12. Procédé selon l'une quelconque des revendications 8 à 11,
**caractérisé en ce que** la détection de l'au moins une propriété du conteneur interchangeable (20, 22) comprend un établissement d'une liaison de données filaire entre l'unité de détection et une unité de mémorisation associée au conteneur interchangeable.

13. Procédé selon l'une quelconque des revendications 8 à 12,
**caractérisé en ce qu'**il comprend en outre une détection d'informations sur l'état de fonctionnement instantané du véhicule (10) et/ou sur son environnement par au moins une autre unité de détection (36, 60) et une adaptation du programme de déroulement à l'aide desdites informations.

14. Procédé selon l'une quelconque des revendications 8 à 13, **caractérisé en ce que** le programme de déroulement concerne une opération de changement, de chargement, de déchargement et/ou d'évacuation du conteneur interchangeable (20, 22).
